# EUROPEAN PATENT SPECIFICATION

(11) **EP 3 984 868 B1**
(45) Date of publication and mention of the grant of the patent: **07.01.2026**
(21) Application number: 20202530.0
(22) Date of filing: 19.10.2020
(51) Int. Cl.: B62J 1/16, B62J 1/28, B62J 7/08, B62J 17/083

(54) **CARGO BICYCLE WITH A REAR SAFETY CAGE AND CANOPY, AND CARGO BICYCLE COMPRISING CANOPY**
LASTENFAHRRAD MIT HINTERER SICHERHEITSKÄFIG UND SCHUTZDACH
VÉLO CARGO COMPRENANT UNE CAGE DE SÉCURITÉ ARRIÈRE ET UN AUVENT

(43) Date of publication of application: 20.04.2022
(73) Proprietor: Mobility Holdings, Limited, Hong Kong (HK)
(72) Inventor: Hsu, Chao Liang, Causeway Bay (HK); Hon, Joshua, Causeway Bay (HK); Uimonen, Joakim, Causeway Bay (HK); Lin, Wan Ru, Causeway Bay (HK); Davis, Matthew Lawrence, Causeway Bay (HK)
(74) Representative: Lang, Christian

(56) References cited:
- JP-B1- 6 153 186
- JP-U- 3 196 748
- OVERHOLT ZACH: "Yuba adds 30'' wide cable actuated dual kickstand, Pop Top cover & $999 cargo bike", BIKERUMOR.COM, 17 January 2020 (2020-01-17), XP055781581, Retrieved from the Internet <URL:https://bikerumor.com/2020/01/17/yuba-adds-30-wide-cable-actuated-dual-kickstand-pop-top-cover-999-cargo-bike/> [retrieved on 20210303]
- UNKNOWN: "Pop Top Cover", 3 March 2021 (2021-03-03), XP055781587, Retrieved from the Internet <URL:https://www.yubaeurope.com/bikes-add-ons/add-ons/pop-top-cover> [retrieved on 20210303]

## Description

### TECHNICAL FIELD

The present invention relates generally to the field of transportation and, more particularly, to cargo bicycles having a rear safety cage with a canopy for forming a usable interior.

### BACKGROUND

Cargo bicycles are sturdy bikes which are designed to carry heavier loads and/or two or more individuals. Often, cargo bicycles have a longer wheelbase than standard bicycles, with a space for carrying the heavier loads either in the front or back. Generally, cargo bicycles carrying heavier loads in the back include a rear rack and can be called longtail bikes. Accessories can be integrated with or attached to longtail bikes for customizing specific carrying needs, including passenger bike seats, child bike seats, footboards, cages, boxes, and canopies.

Known canopies are semi-closed or closed coverings for accommodating bicyclists, cargo, pets, and/or individuals. Semi-closed canopy coverings can increase a power needed for operation of cargo bicycles, by increasing an air resistance of the cargo bicycles through design, such as exposing at least a partial rear covering and/or lack of stability and/or sturdiness resulting in wobbling, such as a lack of taut spring forces, a lack of reinforced support, and a lack of crosswise tension by use of separate mounted clamps and/or bracket attachment means. In addition, semi-closed canopy coverings can be inconvenient for users as complete protection from rain, wind, snow, or the cold is not provided and convenient modifiable openings are unavailable.

Closed coverings can increase a power needed for operation of cargo bicycles, by increasing an air resistance of the cargo bicycles through design, such as L-shaped angles, increasing weight, such as use of hard materials and/or over four separate poles, and/or lack of stability and/or sturdiness resulting in wobbling, such as a lack of taut spring forces, a lack of reinforced support, and a lack of crosswise tension by use of separate mounted clamps and/or bracket attachment means.

As presented online by Overholt Zach ("Yuba adds 30" wide cable actuated dual kickstand, Pop Top cover & $999 cargo bike", "Pop Top Cover") a cargo bicycle available on the market comprises a rear safety cage (Adjustable Monkey Bars) and two footboards and may be equipped with a canopy (pop top cover) to form an upper interior space for accommodating individuals (children), wherein storage bags may be additionally used on such cargo bicycle, wherein one storage bag is mounted on each side of the rear wheel between a bottom of the rear safety cage and the corresponding footboard.

### SUMMARY

A cargo bicycle, comprising a rear safety cage and two footboards according to claim 1 is proposed, which further comprises a canopy and a box for offering a convenient modifiable cabin for a user, while being stable and sturdy when parked and during moving operation of a cargo bicycle. Preferred embodiments are further defined in the dependent claims.

The canopy for cargo bicycles, forming an interior space for accommodating individuals is designed such that it can be reinforced by a rear safety cage of a cargo bicycle. Side elements and detachable side fastening elements are provided to modify openings of the interior space between furled and unfurled states. A frame structure comprising a front spring force arched cross member and a rear spring force arched cross member, at least partially reinforced by the rear safety cage and two diagonal arched ceiling members providing a crosswise bent spring force and forming four approximately central wedge-like aerodynamic shapes is provided.

A greater bending stiffness of the front and/or rear spring force arched members tightly attached flush with a front bar and rear bar of the rear safety cage by a simple attachment latching means providing crosswise stretching tension, and crosswise bent spring force arrangement of the two diagonal arched ceiling members provide stable and sturdy framing of the interior space.

Thus, a minimal member, four members, simpler attachment, simple attachment latching means, convenient handling, tensioned and spring force and attachment design, stable and sturdy canopy is provided for users. The canopy is designed as a sturdy soft-shelled cabin having an interior space for accommodating individuals.

By providing side opening modification means, it is possible to change side openings of the interior space and thus vary the interior environment of the canopy conveniently. In particular the canopy can be modified by means of opening modification means between a furled state, in which the at least one side element has a side opening of the interior space, and an unfurled state, in which the at least one side element has no side opening of the interior space. If a temperature of the interior environment is needed to be lowered and/or it is preferred by individuals for comfort and/or prevention of motion sickness is needed etc., users can modify the canopy to more than one furled state. Each of two side elements of the canopy can be separately opened completely and/or optionally, in spaced intervals, by rolling and/or folding and one-step central, for complete opening or two-step side, for spaced intervals or optionally, complete opening, attachment. If protection from outside weather elements is needed, for example, rain, wind, snow, cold, etc., users can modify the canopy to more than one unfurled state. In particular, the side opening is less than 50%, preferably less than 75%, and particularly preferable less than 90% of the area of a respective side wall of the at least one side element. The canopy can be in the furled and unfurled states while parked and during moving operation of the cargo bicycle.

The term "canopy" in the present context is understood to mean a soft-shelled cabin provided on a rear safety cage of a cargo bicycle, which offers a usable interior space for accommodating individuals. The interior space is composed of several wall elements. The wall elements comprise a floor opening, a ceiling element, a front wall, a rear wall and two side walls. The term "cargo bicycle" in the present context is understood to mean any pedal, pedal-based electric assist, electric, 2-wheeled, 3-wheeled, or 4-wheeled bicycles, suitable for use in having a soft-shelled canopy attached thereto. It is preferred that the cargo bicycle has a rear safety cage, a rear rack and two footboards integrated and/or mounted to a rear of the cargo bicycle. The term "rear rack" in the present context is understood to mean any bicycle rear rack that can be integrated or mounted to a rear of the cargo bicycle. In particular, passenger bike seats and/or rack mount child bike seats can be mounted on the rear rack of the cargo bicycle . The term "footboards" in the present context is understood to mean any bicycle footboard and/or footboard means that can be integrated or mounted to a rear of the cargo bicycle. In particular, bicycle footrests, running boards, and/or footboards can be mounted to the cargo bicycle and/or on a corresponding frame structure of the cargo bicycle for accommodating feet of individuals.

The cargo bicycle can have a box, reinforced by the rear safety cage and two footboards of the cargo bicycle, forming a soft-shelled seating cabin having a lower interior space and two lower interior side spaces for accommodating bottom portions of individuals. In particular, the box wall elements comprise two box side elements, two box inner side shaping elements, a front box element, a front box shaping element, a rear box element and a rear box shaping element for protecting individuals from outside weather elements, for example, rain, wind, snow, cold, etc., dirt, gravel, mud, sand etc. kicked up from dirt and/or gravel roads and/or dirty puddles and rivulets, and spinning bike wheel spokes during moving operation of the cargo bicycle.

The term "rear safety cage" in the present context is understood to mean any structure that can be integrated and/or mounted to a rear of a cargo bicycle having a rear rack and two footboards, which the canopy can be simply and sturdily secured to, offering a usable interior seating space. In particular, the rear safety cage comprises bar elements for forming the interior seating space, wherein the bar elements comprise a front bar, two front supporting bars, a rear bar, two rear supporting bars and two side bars and the front bar forms two front protruding elements and the rear bar forms two rear protruding elements.

By providing a frame structure for framing of the interior space, following modification of the side openings of the interior space and thus varying the interior environment of the canopy, the canopy remains stable and sturdy while parked and during moving operation of the cargo bicycle. In particular, the frame structure comprises a front spring force arched cross member, a rear spring force arched cross member, and two diagonal arched ceiling members, four members, which are slip-on mounted to the canopy for minimal parts and simple attachment. A greater bending stiffness of the front and/or rear spring force arched members, edge mounting position on the front wall and a rear wall, respectively, and crosswise bent spring force arrangement of the two diagonal arched ceiling members provides tautening spring forces for stable and sturdy framing of the interior space.

By providing attachment latching means of the canopy, the canopy can be tightly slip-on mounted to the cargo bicycle through the two front protruding elements and two rear protruding elements of the rear safety cage, conveniently and simply, providing crosswise stretching tension, while also allowing for convenient and simple removal.

By providing a greater bending stiffness of the front and/or rear spring force arched members, when the canopy is attached to the rear safety cage and in an unfurled state, the front wall and rear wall comprise a reinforced area. In particular, the reinforced area is the area of the front wall and rear wall having the greater bending stiffness front and/or rear spring force arched members, respectively, flush with the front bar and rear bar of the rear safety cage for stability and sturdiness of the canopy, particularly preferable during moving operation of the cargo bicycle. The reinforced area of the two side walls is provided when either or both of the two side walls of the canopy is/are in an unfurled state, wherein at least a part of the tightly slip-on mounted two side walls, respectively, when in an unfurled state, is/are flush with two side bars of the rear safety cage, respectively. When either or both of the two side walls of the canopy is/are in a furled state, the crosswise bent spring force arrangement of the two diagonal arched ceiling members compensate for the decreased reinforcement provided by the rear safety cage for stability and sturdiness of the canopy, particularly preferable during moving operation of the cargo bicycle.

In a preferred embodiment, a canopy for cargo bicycles to form a useful upper interior space for accommodating individuals, wherein the canopy is designed such that it can be reinforced by a rear safety cage of a cargo bicycle, wherein opening modification means for modifying openings of the upper interior space is provided. In particular the canopy is formed as an independent, sturdy soft-shelled cabin, wherein the canopy comprises wall elements for forming the upper interior space, and wherein the wall elements comprise a floor opening, a ceiling element, a front wall, a rear wall and two side walls. Particularly preferred, the canopy comprises at least one, in particular two side elements and is detachable against two side fastening elements of the canopy in a furled state of the at least one side element, wherein the side elements and two side fastening elements are formed by the two side walls.

The canopy can be modified by means of opening modification means between a furled state, in which the at least one side element has a side opening of the upper interior space, and an unfurled state, in which the at least one side element has no side opening of the upper interior space. In particular, the side opening is less than 50%, preferably less than 75%, and particularly preferable less than 90% of the area of a respective side wall of the at least one side element. Particularly preferred, the canopy comprises furled fastening means, in which the at least one side element can be locked in the furled state of opening modification means by means of furled fastening means.

**In** a preferred embodiment, the canopy is at least partially reinforced by the rear safety cage of the cargo bicycle, in which the front wall and rear wall each have a reinforced area and the two side walls, in an unfurled state, each have a reinforced area. **In** particular the reinforced area is less than 35%, preferably less than 30%, and particularly preferable less than 25% of the area of the front wall, rear wall and the two side walls, respectively. Particularly preferred, the canopy comprises attachment latching means, in which the canopy is at least partially reinforced by the rear safety cage by means of attachment latching means providing crosswise stretching tension.

**In** a preferred embodiment, the canopy has a frame structure for framing of the upper interior space. **In** particular, the frame structure comprises a front spring force arched cross member, a rear spring force arched cross member and two diagonal arched ceiling members. Particularly preferred, the front wall, rear wall and ceiling element of the canopy comprise frame structure receiving means, respectively, in which the front spring force arched cross member, rear spring force arched cross member and two diagonal arched ceiling members are slip-on mounted to the frame structure receiving means of the front wall, rear wall and ceiling element, respectively, by means of the frame structure receiving means, providing tautness to the front wall, rear wall and ceiling element in the furled state and front wall, rear wall, ceiling element and two side walls in the unfurled state.

It is particularly preferred that the canopy comprises a bending stiffness, wherein the bending stiffness of the front spring force arched cross member and/or a rear spring force arched cross member is greater than the bending stiffness of the two diagonal arched ceiling members. In particular the canopy is at least partially reinforced by the rear safety cage of the cargo bicycle, in which the front spring force arched cross member and a rear spring force arched cross member provide tautness to the front wall and rear wall, and each have a reinforced area flush with the front bar and rear bar of the rear safety cage for stability and sturdiness of the canopy, particularly preferable during moving operation of the cargo bicycle.

In a further preferred embodiment, the canopy comprises an aerodynamic shape, wherein the ceiling element taper in height toward the front wall, rear wall and two side walls of the canopy and form approximately central wedge-like aerodynamic shapes. The aerodynamic shapes decrease power needed for operation of the cargo bicycle by decreasing top air resistance from all sides when parked and from the front and flowing to the rear during forward moving operation of the cargo bicycle.

In a further preferred embodiment, the canopy comprises at least one side window on at least one, in particular two side walls, in which the at least one side window has a maximum side window area. In particular, the maximum side window area is less than 65%, preferably less than 70%, and particularly preferable less than 75% of the two side walls, respectively, and positioned above the at least partially rear safety cage reinforced bottom area of the two side walls of the canopy. Particularly preferable, the at least one side window comprises transparent and/or translucent material.

In a further preferred embodiment, the canopy comprises at least one front window on the front wall, in which the at least one front window has a maximum front window area. In particular, the maximum front window area is less than 65%, preferably less than 70%, and particularly preferable less than 75% of the front wall, and positioned above the at least partially rear safety cage reinforced bottom area of the front wall of the canopy. Particularly preferable, the at least one front window comprises transparent and/or translucent material.

In a further preferred embodiment, the canopy comprises at least one front mesh vent element on the front wall, wherein the canopy can be modified by means of opening modification means between a vented furled state and vented unfurled state. In this embodiment, the front wall has at least one front vented opening of the upper interior space and a vented unfurled state, in which the at least one front mesh vent element has no front vented opening of the upper interior space. In particular the front vented opening is less than 25%, preferably less than 30%, and particularly preferable less than 35% of the area of the front wall, and positioned below the at least one front window on the front wall of the canopy and above the at least partially rear safety cage reinforced bottom area of the front wall of the canopy. Particularly preferable, the canopy comprises furled vented fastening means, in which the front vented opening cover can be locked in the vented furled state of opening modification means by means of furled vented fastening means.

In a further preferred embodiment, the canopy comprises at least one rear window on the rear wall, in which the at least one rear window has a maximum rear window area. In particular, the maximum rear window area is less than 25%, preferably less than 30%, and particularly preferable less than 35% of the rear wall, and positioned on an upper portion of the rear wall so that a volume modification means for modifying the volume of the upper interior space can be provided on a lower portion of the rear wall. Particularly preferable, the at least one rear window comprises transparent and/or translucent material.

In a further preferred embodiment, a volume modification means for modifying the volume of the upper interior space is provided. Preferably, the canopy comprises an upper rear element and a lower rear element. Particularly preferable, the upper rear element comprises an expansive element integrated with a non-expansive element, as an example, the expansive element is integrated centrally with the non-expansive element and below the at least one rear window of the canopy. Conveniently, the upper rear element overlaps and is expandable against the lower rear element, wherein the upper rear element and lower rear element are formed by the rear wall.

In this embodiment, it is particularly preferred that the canopy can be modified by means of volume modification means between an expansive state, in which the upper interior space has a maximum volume, and a non-expansive state, in which the upper interior space has a non-expansive volume. In particular, the non-expansive volume is less than 5%, preferably less than 10%, and particularly preferable less than 15% of the maximum volume. Particularly preferable, the canopy comprises adjustable means, in which the canopy can be modified to the expansive state and/or non-expansive state of volume modification means by means of adjustable means, as an example, adjustable straps attached to side release buckles integrated to two opposing sides of the expansive element and corresponding sides of the non-expansive element.

A rear safety cage of a cargo bicycle is further provided to form a useful interior seating space for accommodating individuals, wherein the rear safety cage of the cargo bicycle is configured to at least partially reinforce a canopy according to one of the preceding examples.

In a preferred embodiment, the rear safety cage comprises bar elements for forming the interior seating space. Preferably, the bar elements comprise a front bar, two front supporting bars, a rear bar, two rear supporting bars and two side bars. Particularly preferable, the front bar and rear bar form two front protruding elements and two rear protruding elements. The canopy is designed such that it is at least partially reinforced by the rear safety cage by flush tight attachment to the front bar and rear bar. In particular, the canopy is expediently slip-on attached to the two front protruding elements and two rear protruding elements, respectively.

In summary, a cargo bicycle having a canopy attached thereto, more specifically, a cargo bicycle having a rear safety cage having a canopy attached thereto, as described above, is provided.

### BRIEF DESCRIPTION OF THE DRAWINGS

Unless specified otherwise, the accompanying drawings illustrate aspects of the innovative subject matter described herein. Referring to the drawings, similar reference numerals indicate similar parts throughout the several views, wherein several examples of cargo bicycles incorporating aspects of the presently disclosed principles are illustrated by way of example, and not by way of limitation.
Fig. 1A is a schematic perspective view of a canopy, according to an example embodiment.
Fig. 1B is a schematic perspective view of the canopy of Fig. 1A having a side element in a furled state, according to an example embodiment.
Fig. 1C is a schematic perspective view of the canopy of Fig. 1A, according to an example embodiment.
Fig. 1D is a schematic perspective view of the canopy of Fig. 1A having a side element in a furled state and front and rear spring force arched cross members and two diagonal arched ceiling members partial slip-on unmounted, according to an example embodiment.
Fig. 2 is a schematic perspective front view of an alternative canopy having a front vented opening and cover, according to an example embodiment.
Fig. 3A is a schematic perspective view of a canopy and a box reinforced by a rear safety cage and a box reinforced by two footboards of a cargo bicycle, according to an example embodiment.
Fig. 3B is a schematic perspective view of the canopy of Fig. 3A having a bicyclist and individuals, according to an example embodiment.
Fig. 3C is a schematic perspective view of the canopy of Fig. 3A having bicyclist and individuals and side elements in a furled state.
Fig. 4A is a schematic perspective rear view of a box of a cargo bicycle, according to an example embodiment.
Fig. 4B is a schematic perspective front view of the box of Fig. 4A.
Fig. 4C is a schematic perspective view of the box of Fig. 4A.
Fig. 5 is a schematic perspective view of a rear safety cage, rear rack, and two footboards of a cargo bicycle having a bicyclist and individuals.
Fig. 6 is a schematic perspective view of an alternative rear safety cage, rear rack, and two footboards of a cargo bicycle having a bicyclist and individuals.
Fig. 7 is a schematic perspective rear view of a rear rack and two footboards of a cargo bicycle.
Fig. 8 is a schematic perspective view of another alternative rear safety cage, rear rack, and two footboards of a cargo bicycle having a bicyclist and individuals.
Fig. 9 is a schematic perspective exploded view of a canopy, box, and rear safety cage, rear rack, and two footboards of a cargo bicycle, according to an example embodiment.

### DETAILED DESCRIPTION

The following describes various principles related to the field of transportation by way of reference to specific examples of canopies for cargo bicycles for forming a usable interior, including arrangements and examples of canopies, boxes, cargo bicycle rear safety cages with canopies and/or boxes, and cargo bicycles with canopies and/or boxes embodying innovative concepts. More particularly, but not exclusively, such innovative principles are described in relation to selected examples of canopies, boxes, cargo bicycle rear safety cages with canopies and/or boxes, and cargo bicycles with canopies and/or boxes and well-known functions or constructions are not described in detail for purposes of succinctness and clarity. Nonetheless, one or more of the disclosed principles can be incorporated in various other embodiments of cargo bicycles, canopies and boxes thereof to achieve any of a variety of desired outcomes, characteristics, and/or performance criteria.

Thus, canopies, boxes, cargo bicycle rear safety cages with canopies and/or boxes, and cargo bicycles with canopies and/or boxes having attributes that are different from those specific examples discussed herein can embody one or more of the innovative principles and can be used in applications not described herein in detail. Accordingly, embodiments of canopies, boxes, cargo bicycle rear safety cages with canopies and/or boxes, and cargo bicycles with canopies and/or boxes not described herein in detail also fall within the scope of this disclosure, as will be appreciated by those of ordinary skill in the relevant art following a review of this disclosure.

As disclosed herein, in a preferred embodiment, a canopy 1 for cargo bicycles forming an upper interior space 7 for accommodating individuals 70 is designed such that it can be reinforced by a rear safety cage 52 of a cargo bicycle 50, comprising wall elements 4, 5, 6A, 6B, forming the upper interior space 7 and a frame structure 452, 552, 352E, 352F, framing the upper interior space 7. Side elements 60A, 60B and detachable side fastening elements 65a/65d, 65b/65c are provided to modify openings of the upper interior space 7 between furled and unfurled states. Front vented openings 40 and front vented opening covers 45 are provided to modify openings of the upper interior space 7 between vented furled and vented unfurled states. The frame structure comprises a front spring force arched cross member 452 and a rear spring force arched cross member 552, at least partially reinforced by the rear safety cage 52, and two diagonal arched ceiling members 352E, 352F, forming four approximately central wedge-like aerodynamic shape. The bending stiffness of the front and/or rear spring force arched members 452, 552 is/are greater than the bending stiffness of the two diagonal arched ceiling members 352E, 352F.

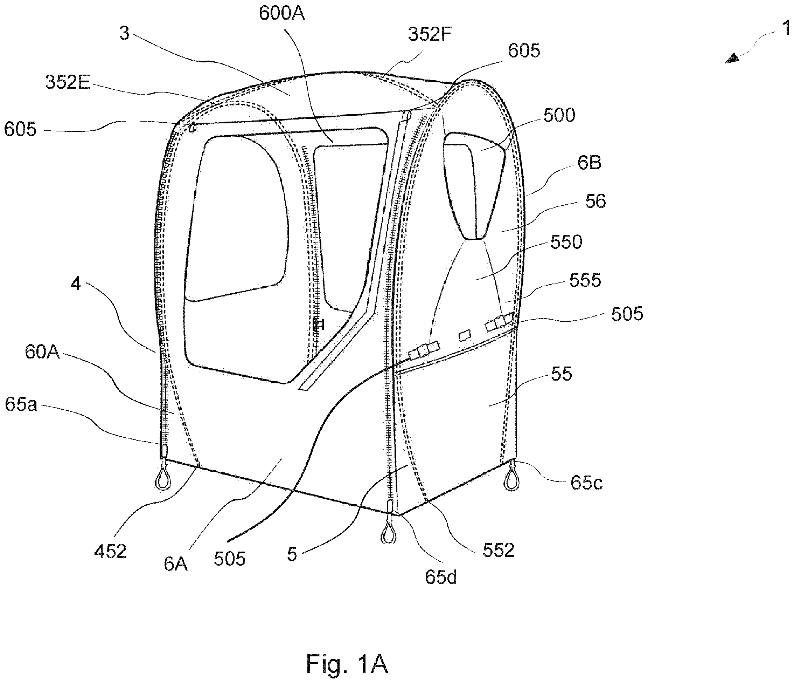

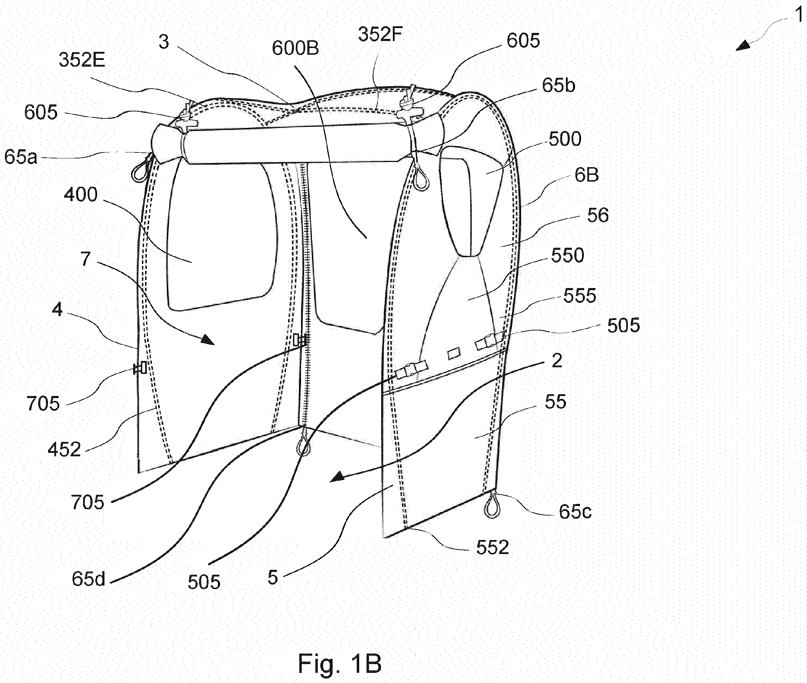

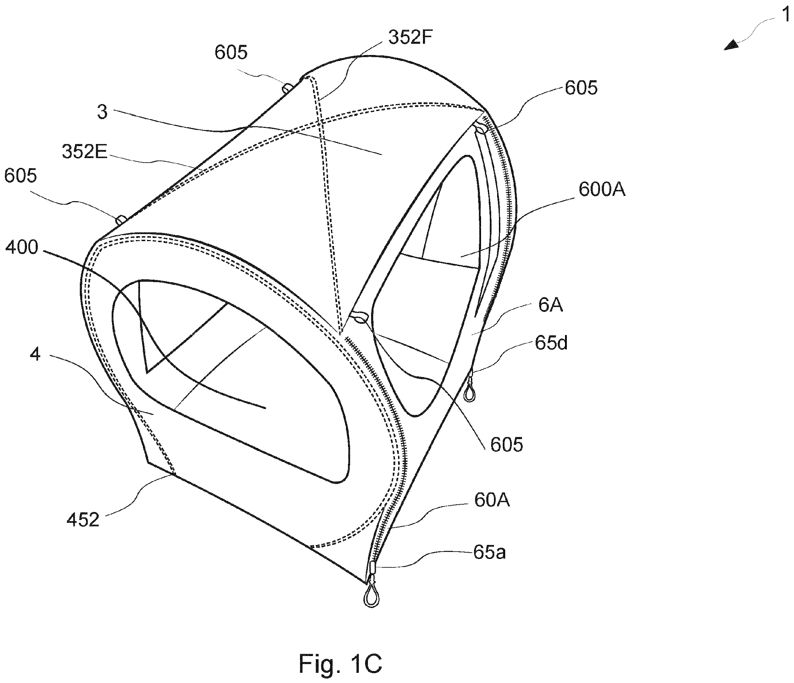

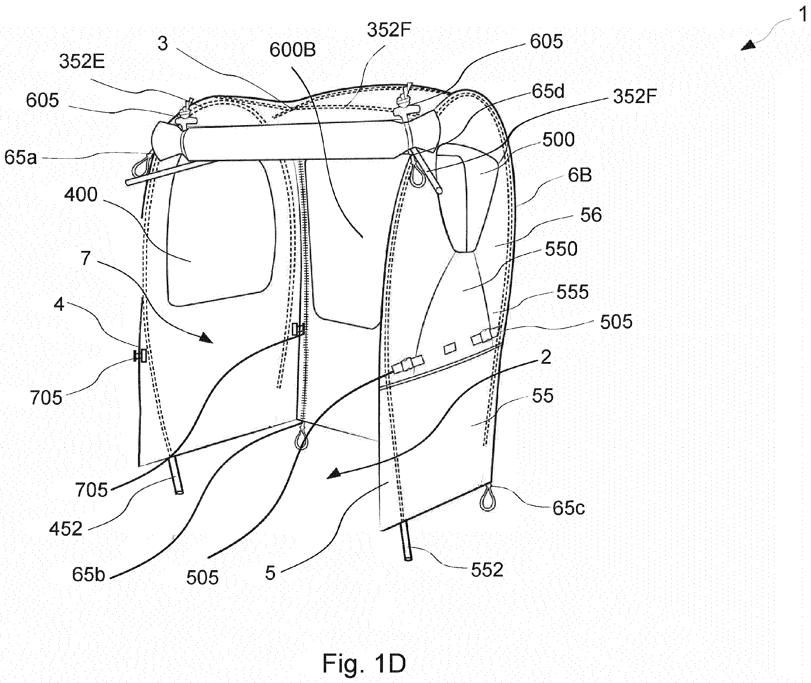

Figs. 1A, 1B and 1C show a schematic perspective view and Fig. 1D show a schematic perspective view of a canopy of this application. In Figs. 1A and 1C, the canopy 1 is in an unfurled state, and optionally, in Figs. 1B and 1D, the canopy 1 is in a furled state. The canopy 1 comprises wall elements for forming a sturdy soft-shelled cabin and an interior space 7 for accommodating individuals 70. The wall elements comprise a floor opening 2, a ceiling element 3, a front wall 4, a rear wall 5 and two side walls 6A, 6B. The front wall 4, the rear wall 5 and the two side walls 6A, 6B are generally of the same sizes and shapes and positioned on corresponding opposing sides of the interior space 7, respectively, integrative combined, forming a generally cube and/or cuboid shape. The two side walls 6A, 6B are generally quadrilateral shaped and the front wall 4 and rear wall 5 are generally quadrilateral shaped with an arch on one end, in which the arch is positioned on the integrative end with the ceiling element 3, respectively. The ceiling element 3 is generally positioned on a corresponding opposing side of the floor opening 2 and forms a generally elliptic paraboloid shape, tapering in height toward the front wall 4 and rear wall 5 of the canopy 1, forming four generally even spaced taut central wedge-like aerodynamic shapes. The height of the canopy 1 from the floor opening 2 to the top of a center of the arch of the ceiling element 3 is between 80cm to 125cm, inclusive, in particular 83cm. The length of the canopy 1 from the front wall 4 to the rear wall 5 is between 45cm to 85cm, inclusive, in particular 65cm. The width of the canopy 1 between the two side walls 6A, 6B is between 60cm to 80cm, inclusive, in particular 60cm. One individual, in particular two individuals can occupy the interior space 7 during operation of the cargo bicycle 50. The height of the individuals can be between 75cm to 200cm, inclusive.

A frame structure frames the interior space 7 of the canopy 1, steading and/or stabilizing the cube and/or cuboid shape of the front wall 4, rear wall 5 and two side walls 6A, 6B and generally elliptic paraboloid shape of the ceiling element 3, respectively, comprising a front spring force arched cross member 452, a rear spring force arched cross member 552, and two diagonal arched ceiling members 352E, 352F. The two diagonal arched ceiling members 352E, 352F are crosswise bent spring force arranged to form the generally elliptic paraboloid shape, tapering in height toward the front wall 4 and rear wall 5 of the canopy 1, forming the four generally even spaced taut central wedge-like aerodynamic shapes. The bending stiffness of the front spring force arched cross member 452 and/or a rear spring force arched cross member 552 is greater than the bending stiffness of the two diagonal arched ceiling members 352E, 352F. The front spring force arched cross member 452, rear spring force arched cross member 552 and two diagonal arched ceiling members 352E, 352F can consist of fiberglass, carbon fiber, and/or composite material, in particular, the diameter dimension of the front spring force arched cross member 452 and/or rear spring force arched cross member 552 can be 7mm and/or 6mm, respectively, and the diameter dimension of the two diagonal arched ceiling members 352E, 352F can be 5mm and/or 4 mm, respectively. Also in particular, the straightened length of the front spring force arched cross member 452 before mounting to the front wall 4 and/or rear spring force arched cross member 552 before mounting to the rear wall 5 can be between 200cm and 300cm, inclusive, particularly preferable 220cm and the straightened length of the two diagonal arched ceiling members 352E, 352F before mounting to the ceiling element 3 can be between 61cm and 101cm, inclusive, particularly preferable 81cm.

The front spring force arched cross member 452, a rear spring force arched cross member 552 and two diagonal arched ceiling members 352E, 352F are slip-on mountable to frame structure receiving means of the front wall 4, rear wall 5 and ceiling element 3 of the canopy 1. The frame structure receiving means of the canopy 1 can be made of two and/or more materials and/or fabrics and can be particularly less than 50% in total area, preferably less than 75% in total area, and particularly preferable 100% encased therein.

On at least one, in particular two side walls 6A, 6B, the canopy 1 can comprise at least one side window 600A, 600B integrated therewith, respectively, and on the front wall 4 and rear wall 5, the canopy 1 can comprise at least one front window 400 and at least one rear window 500 integrated therewith, respectively. The at least one side window 600A, 600B has a maximum side window area, wherein in particular the maximum side window area is less than 65%, preferably less than 70%, and particularly preferable less than 75% of the two side walls 6A, 6B, respectively. Particularly preferable the at least one side window 600A, 600B comprises transparent and/or translucent material. The at least one front window 400 has a maximum front window area, wherein the maximum front window area is less than 65%, preferably less than 70%, and particularly preferable less than 75% of the front wall 4. Particularly preferable, the at least one front window 400 comprise transparent and/or translucent material. The at least one rear window 500 has a maximum rear window area, wherein the maximum rear window area is less than 10%, preferably less than 20%, and particularly preferable less than 30% of the rear wall 5. Particularly preferable, the at least one rear window 500 comprise transparent and/or translucent material.

Opening modification means for modifying openings of the interior space 7 between a furled and unfurled state are provided for the canopy 1. The canopy 1 comprises at least one, in particular two side elements 60A, 60B and is detachable against two side fastening elements 65a/65d, 65b/65c of the canopy 1 in a furled state of the at least one side element, wherein the side elements 60A, 60B and two side fastening elements 65a/65d, 65b/65c are formed by the two side walls 6A, 6B. In the furled state, the at least one side element has a side opening of the interior space 7, and in an unfurled state, the at least one side element has no side opening of the interior space 7. The canopy 1 comprises furled fastening means 605, in which the at least one side element can be locked in the furled state of opening modification means by means of furled fastening means 605. A space is provided for each of the two side elements 60A, 60B and detachable two side fastening elements 65a/65d, 65b/65c, on a top end nearest to the integrative end with the ceiling element 3, respectively, dependent upon the size of the area of the side openings, respectively.

At least one, in particular the two side elements 60A, 60B of the canopy 1 can be provided with a roller means (not shown), for example, a plastic pole having a diameter smaller than 4mm. The roller means can be mounted to ends of the two side elements 60A, 60B forming the floor opening 2 for ease of rolling and/or folding and/or to provide additional weight on the two side elements 60A, 60B, particularly, when in a furled state for additional stability and/or sturdiness of the canopy 1, particularly, during forward moving operation of the cargo bicycle 50.

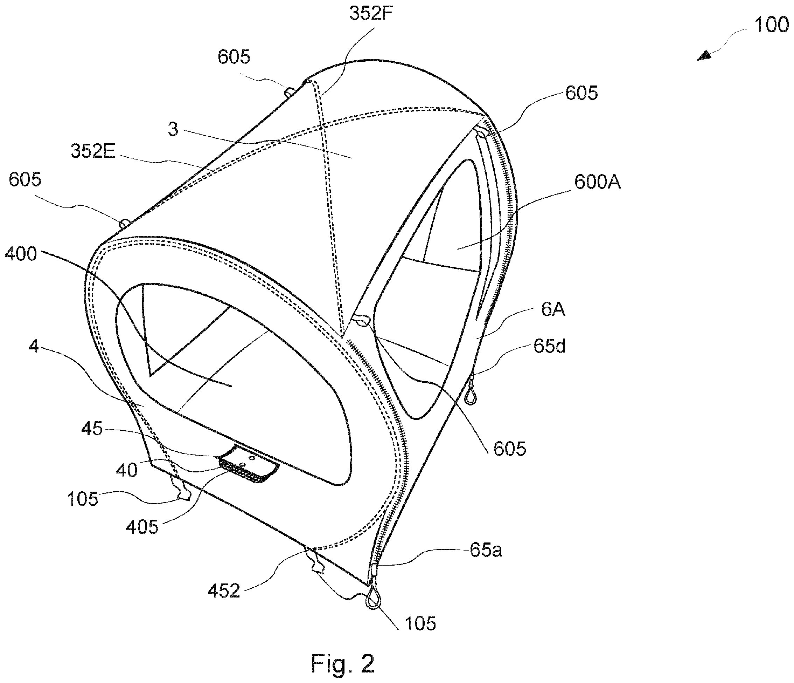

Fig. 2 shows a schematic perspective front view of an alternative canopy having a front vented opening and cover. The canopy 100 comprises a front vented opening formed by at least one front mesh vent element 40 and a corresponding front vented opening cover 45 on the front wall 4. The at least one front mesh vent element 40 can be a meshed structure integrated with and/or to the front wall 4, consist of material and/or fabrics, and positioned below the at least one front window 400 on the front wall 4 of the canopy 1 and above the at least partially rear safety cage 52 reinforced bottom area of the front wall 4 of the canopy 1. The canopy 1 can be modified by means of opening modification means between a vented furled state and vented unfurled state. In the vented unfurled state, the at least one front mesh vent element 40 has no front vented opening of the upper interior space 7. In the vented furled state, the at least one front mesh vent element 40 has a front vented opening of the upper interior space 7, in particular the front vented opening is less than 25%, preferably less than 30%, and particularly preferable less than 35% of the area of the front wall 4. The shape of the front vented opening cover 45 is generally quadrilateral shaped and corresponds to the shape of the at least one front mesh vent element 40. The shape of the at least one front mesh vent element 40 and front vented opening cover 45 can have less than four sides, more than four sides, curved shapes, and/or combinations thereof, respectively. The amount of the at least one front mesh vent element 40 and front vented opening cover 45 can be one, two, three, or greater than three, respectively. The canopy 1 comprises furled vented fastening means 405, in which the front vented opening cover 45 can be locked in the vented furled state of opening modification means by means of furled vented fastening means 405.

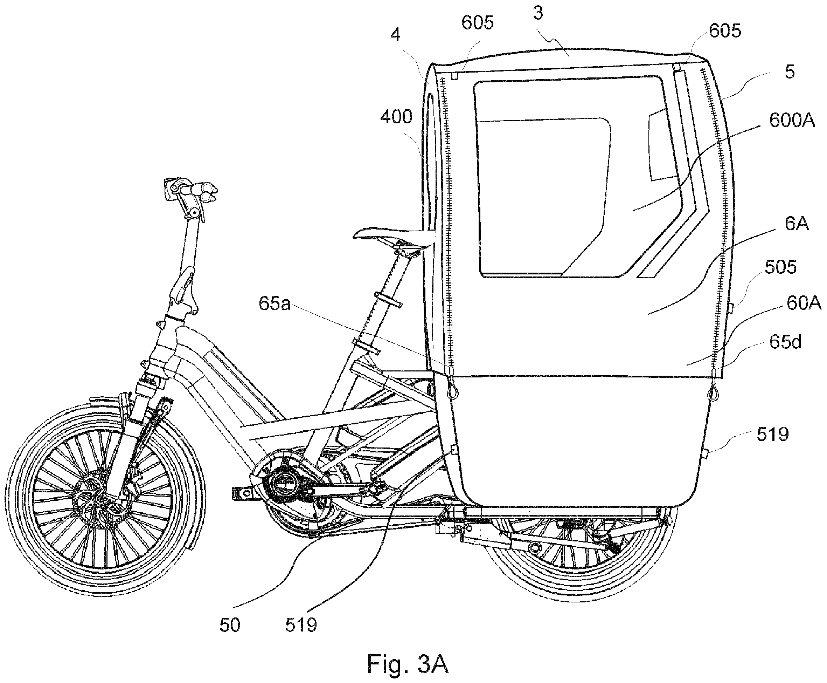

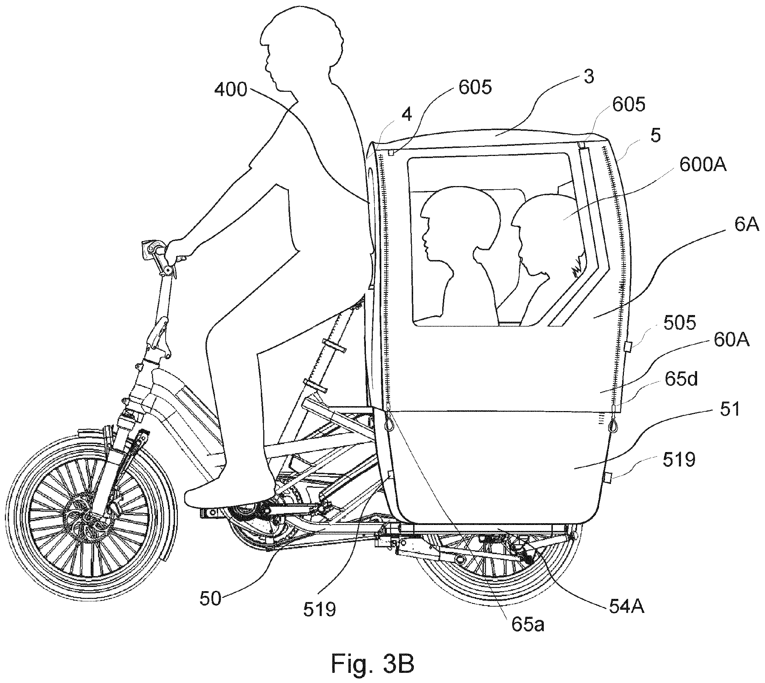

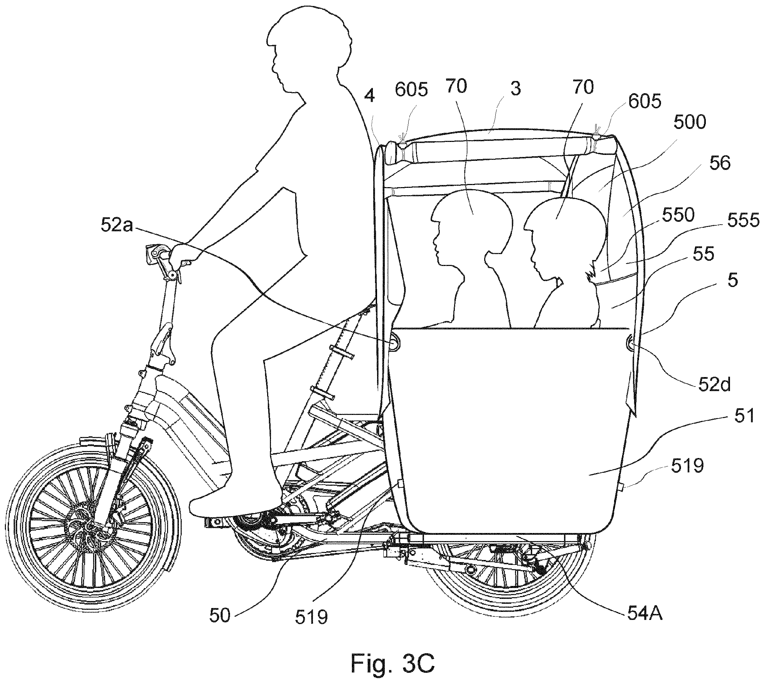

Figs. 3A to 3C each show schematic perspective views of a cargo bicycle 50 with a rear safety cage 52 and two footboards 54A, 54B, and a box 51 and a canopy 1 attached to the cargo bicycle 50 with a rear safety cage 52 and two footboards 54A, 54B. The canopy 1 is similar to the canopy 1 in Figs. 1A to 2. In Figs. 3A and 3B, the canopy 1 is shown in the unfurled state, whereas in Fig. 3C the canopy 1 is shown in the furled state. For example, the side elements 60A, 60B are rolled and/or folded upward from the rear safety cage 52 and box 51 of the cargo bicycle 50 to be detached from the two side fastening elements 65a/65d, 65b/65c to the ceiling element 3, and can be locked in the furled state of opening modification means. A reinforced area of the front spring force arched cross member 452 and rear spring force arched cross member 552, both slip-on mounted to the frame structure receiving means of the front wall 4 and rear wall 5, respectively, is at least partially, continuously reinforced by the front and rear of the rear safety cage 52 of the cargo bicycle 50, respectively, and are firmly attached thereto by means of attachment latching means 705. In particular the reinforced area is less than 35%, preferably less than 30%, and particularly preferable less than 25% of the area of the front wall 4, rear wall 5 and the two side walls 6A, 6B, respectively. In particular, the canopy 1 comprises attachment latching means 705, in which the canopy 1 is at least partially reinforced by the rear safety cage 52 by means of attachment latching means 705.

Detachment of the side elements 60A, 60B from the two side fastening elements 65a/65d, 65b/65c can be realized by zippers and the furled fastening means 605 can be realized by loops and toggles; however, the embodiments are not limited thereto. Alternatively, detachment can be realized by Velcro strips, snap fasteners, and/or tapey snappers etc. and the furled fastening means 605 can be realized by string/rope/material strips, hook loop fastening straps, buckle mechanisms, and/or clips mechanisms etc..

Optionally, the side elements 60A, 60B can be detached from the two side fastening elements 65a/65d, 65b/65c)and rolled and/or folded upward and be locked in the furled state of opening modification means in two, three, four, or five or more spaced intervals, having two, three, four, or five or more corresponding interval spaced furled fastening means 605 on the outer side of the two side fastening elements 65a/65d, 65b/65c.

In the furled state of opening modification means, the reinforcement of the front spring force arched cross member 452 and rear spring force arched cross member 552 by the front bar 524 and rear bar 525 of the rear safety cage 52 of the cargo bicycle 50, respectively, firm attachment of the canopy 1 to the rear safety cage 52 by means of attachment latching means 705, and bending stiffness of the front spring force arched cross member 452 and/or a rear spring force arched cross member 552, being greater than the bending stiffness of the two diagonal arched ceiling members 352E, 352F, provide the canopy 1 with stiffness against front to rear airflow during forward moving operation of the cargo bicycle 50. The bending stiffness of the two diagonal arched ceiling members 352E, 352F being less than the front spring force arched cross member 452 and/or a rear spring force arched cross member 552, and aerodynamic shape of the tapered ceiling element 3 in height toward the front wall 4 and rear wall 5 of the canopy 1, provide the canopy 1 with a lighter weight on the ceiling element 3 and lighter weight of the canopy 1, stiffness against side to side airflow during operation of the cargo bicycle 50, a higher height toward the center of the ceiling element 3 for head positioning of individuals 70 and aerodynamic front to rear and side to side shapes, when parked and during moving operation.

The described parts of the front window 400, rear window 500, and two side windows 600A, 600B of the canopy 1 may consist of transparent and/or translucent and/or UV resistant material, in particular plastic and/or PVC materials. The front window 400, rear window 500, and two side windows 600A, 600B seals, and side elements 60A, 60B and two side fastening elements 65a/65d, 65b/65c detachable seals, are provided so that the upper interior space 7 is protected against moisture and dirt.

The described parts of the front window 400, rear window 500, and two side windows 600A, 600B of the canopy 1 may consist of transparent and/or translucent and/or UV resistant material, in particular plastic and/or PVC materials. The front window 400, rear window 500, and two side windows 600A, 600B seals, and side elements 60A, 60B and two side fastening elements 65a/65d, 65b/65c detachable seals, are provided so that the upper interior space 7 is protected against moisture and dirt.

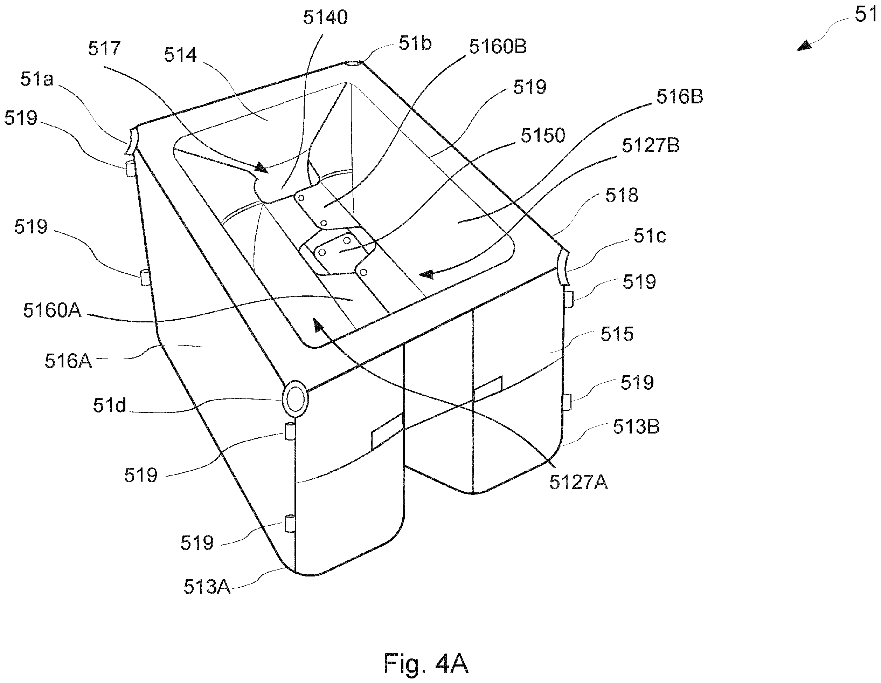

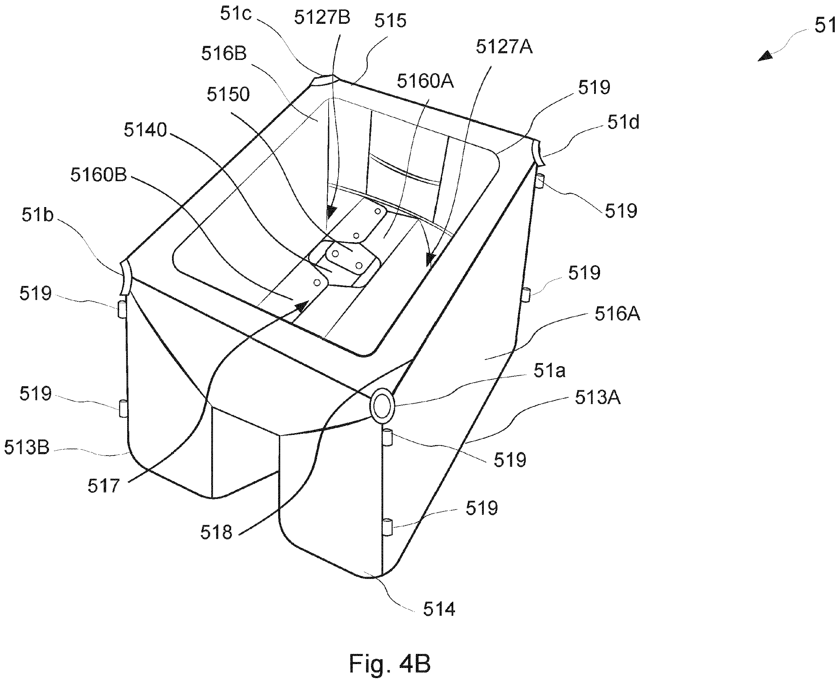

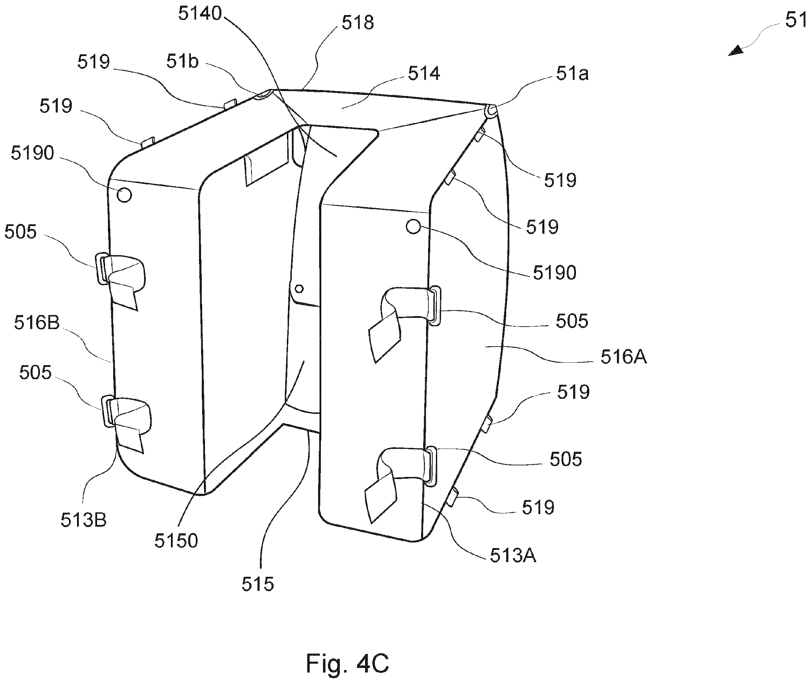

Figs. 4A to 4C show schematic perspective views of a box 51 of a cargo bicycle. The box 51 comprises box wall elements for forming a soft-shelled seating cabin having a lower interior space 517 and two lower interior side spaces 5127A, 5127b for accommodating lower parts of the individuals 70. The box wall elements comprise two box side elements 516A, 516B, two box inner side shaping elements 5160A, 5160B, a front box element 514, a front box shaping element 5140, a rear box element 515 and a rear box shaping element 5150. The front box element 514 and rear box element 515 and two box side elements 516A, 516B are generally of the same sizes and shapes and positioned on corresponding opposing sides of the lower interior space 517 and two lower interior side spaces 5127A, 5127B, respectively, integrative combined. The front box shaping element 5140, rear box shaping element 5150 and two box inner side shaping elements 5160A, 5160B are generally of the same sizes and shapes and positioned on corresponding opposing sides of the two lower interior side spaces 5127A, 5127b, respectively. The two box elements 516A, 516B form a generally cube and/or cuboid shape. The front box element 514 and rear box element 515 form a generally U-shape, in which the opening of the U is positioned facing downward, opposite the lower interior space 517. The front box element 514 is integrative combined with the front box shaping element 5140, the rear box element 515 is integrative combined with the rear box shaping element 5150 and the two box side elements 516A, 516B are integrative combined with the two box inner side shaping elements 5160A, 5160B, respectively. The ends of the two box inner side shaping elements 5160A, 5160B and ends of the front box shaping element 5140 and rear box shaping element 5150 can be attached together, respectively, for example, by side box fastening means, such as Velcro strips, snap fasteners, and/or tapey snappers etc. Bottom portions of the front box element 514, rear box element 515 and two box side elements 516A, 516B form the front, rear, outer sides, and bottoms of the two lower interior side spaces 5127A, 5127b. The two box inner side shaping elements 5160A, 5160B form the inner sides of the two lower interior side spaces 5127A, 5127b. Top openings of the two lower interior side spaces 5127A, 5127b are generally flush and integrated with a bottom opening of the lower interior space 517. One individual, in particular two individuals can occupy the lower interior space 517 and two lower interior side spaces 5127A, 5127b during operation of the cargo bicycle 50.

The box 51 comprises a smaller area elastic edge 519, an upper perimeter edge 518 and two lower perimeter side edges 513A, 513B. The area dimensions of the smaller area elastic edge 519 are smaller than area dimensions of the upper perimeter edge 518, providing an inward tautening pulling force from the upper perimeter edge 518. The smaller area elastic edge 519 can be an elastic band and/or strip. The box 51 comprises two front attachment holes 51a, 51b and two rear attachment holes 51c, 51d through each corner of the upper perimeter edge 518, respectively. The two front attachment holes 51a, 51b and two rear attachment holes 51c, 51d can be structurally strengthened by washer-like plastic, metal, material, and/or fabric pieces integrated surrounding the two front attachment holes 51a, 51b and two rear attachment holes 51c, 51d. The box 51 comprises at least eight attachment receivers 519, as an example, for sliding flexible poles therethrough having at least a banner, advertisement and/or decorative material or fabric attached therebetween. Each of the two box side elements 516A, 516B comprises at least four attachment receivers 519 on opposite edges thereof, front and rear edges. The box comprises at least four footboard attachment means 505, two on each two lower perimeter side edges 513A, 513B, respectively. The box comprises at least two box drainage means 5190, one hole on each bottom portion of the two box side elements 516A, 516B, respectively.

The described parts of the canopy 1 and box 51 may consist of waterproof and/or showerproof, and/or moisture wicking and/or quick drying, and/or wind, dirt, mildew, oil, salt, chemicals and UV ray resistant, materials and/or fabrics and/or coatings. In particular, polyester and/or nylon and/or Taslan materials with sufficient strength and/or stability and/or soft and/or deformable material and/or fabrics and/or PVC coatings. The described parts of the canopy 1 and box 51 may be single-ply, two-ply, and/or three-ply and/or more than three-ply and/or single-layered, two-layered, and/or three-layered and/or more than three-layered materials and/or fabrics.

For the canopy 1 and box 51 outer seals can be provided in the region of edges, so that in addition to the materials and/or fabrics and/or coatings, the upper interior space 7 and lower interior space 5127A, 5127B, respectively, are protected against moisture and dirt.

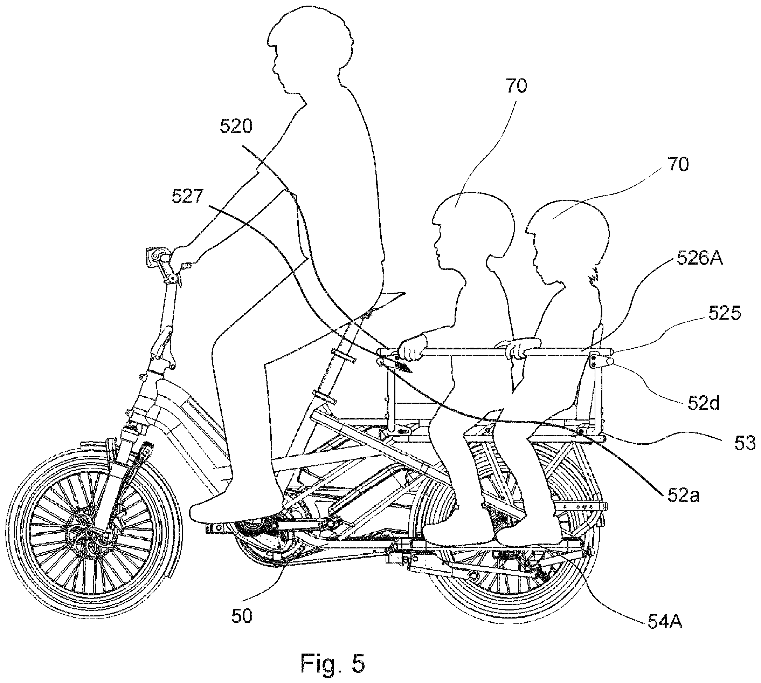

Fig. 5 shows a schematic perspective view of a rear safety cage, rear rack, and two footboards of a cargo bicycle having a bicyclist and individuals. The length of the rear rack 53 of the cargo bicycle 50 is between 64cm to 90cm and the load of the cargo bicycle 50 is up to 200kg. One individual, in particular two individuals can occupy the area of the rear rack 53 during operation of the cargo bicycle 50.

The rear safety cage 52 comprises bar elements for forming the interior seating space 527. The bar elements comprise a front bar 524, two front supporting bars 524a, 524d, a rear bar 525, two rear supporting bars 525b, 525c and two side bars 526A, 526B, wherein the rear safety cage 52 comprises two front protruding elements 52a, 52b and two rear protruding elements 52c, 52d. The front bar 524 forms the two front protruding elements 52a, 52b and the rear bar 525 forms the two rear protruding elements 52c, 52d. The front bar 524 is positioned opposite and parallel to the rear bar 525 and the two side bars 526A, 526B are positioned opposite and parallel to each other and on two same opposing ends of the front bar 524 and rear bar 525 to generally form a quadrilateral shape. The two front supporting bars 524a, 524d are attached to two opposing ends of the front bar 524 generally diagonally inward forming a trapezoid shape with the rear rack 53. The two rear supporting bars 525b, 525c are attached to two opposing ends of the rear bar 525 inward L-shaped forming a generally quadrilateral shape with the rear rack 53.

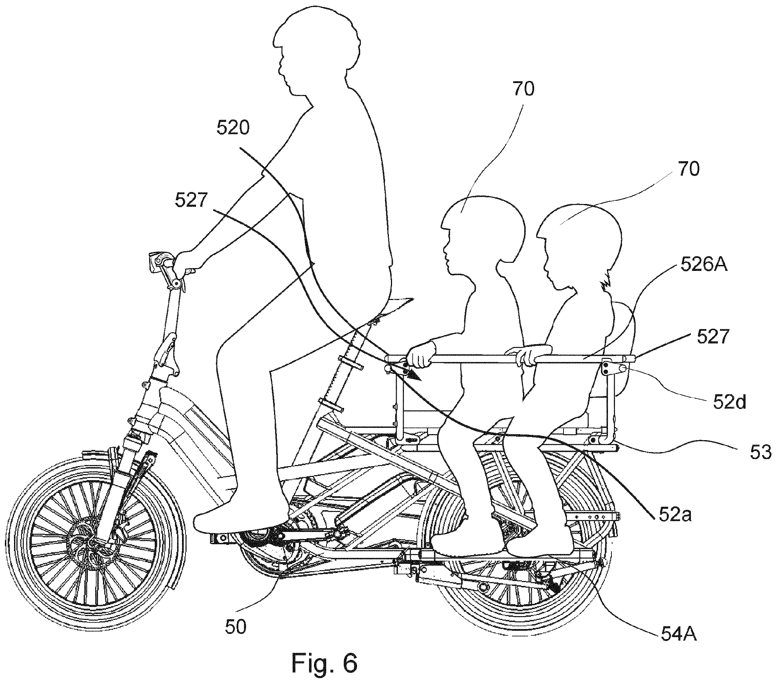

Fig. 6 shows a schematic perspective view of an alternative rear safety cage, rear rack, and two footboards of a cargo bicycle having a bicyclist and individuals, according to an example embodiment. The rear safety cage 520 comprises bar elements for forming the interior seating space 517. The bar elements comprise a front bar 524, two front supporting bars 524a, 524d, an expanded rear bar 527, two rear supporting bars 525b, 525c and two side bars 526A, 526B, wherein the rear safety cage 520 comprises two front protruding elements 52a, 52b and two rear protruding elements 52c, 52d. The front bar 524 forms the two front protruding elements 52a, 52b and the expanded rear bar 527 forms the two rear protruding elements 52c, 52d. The front bar 524 is positioned opposite and parallel to the expanded rear bar 527 and the two side bars 526A, 526B are positioned opposite and parallel to each other and on two same opposing ends of the front bar 524 and expanded rear bar 527 to generally form a quadrilateral shape. The expanded rear bar 527 can be outwardly protruded from a center thereof, forming an elongated U-shape. The elongated U-shape provides additional back space for individuals 70 seated within the interior space 7 and lower interior space 517 and against the expanded rear bar 527, for, as an example, additional items on individuals 70 backs, such as backpacks and/or thick clothing and/or items. The two front supporting bars 524a, 524d are attached to two opposing ends of the front bar 524 generally diagonally inward forming a trapezoid shape with the rear rack 53. The two rear supporting bars 525b, 525c are attached to two opposing ends of the expanded rear bar 527 inward L-shaped forming a generally quadrilateral shape with the rear rack 53.

The canopy 1 shown in Figs. 1A to 3C can comprise a volume modification means for modifying the volume of the interior space 7. The canopy 1 comprises an upper rear element 56 and a lower rear element 55 wherein the upper rear element 56 comprises an expansive element 555 integrated with a non-expansive element 555, in which the upper rear element 55 overlaps and is expandable against the lower rear element 55. The upper rear element 56 and lower rear element 55 are formed by the rear wall 5. A volume of the canopy 1 is modified between an expansive state, in which the interior space 7 has a maximum volume, and a non-expansive state, in which the interior space 7 has a non-expansive volume. In particular the non-expansive volume is less than 5%, preferably less than 10%, and particularly preferable less than 15% of the maximum volume. The canopy 1 further comprises adjustable means 505, in which the canopy 1 can be modified to the expansive state and/or non-expansive state of volume modification means by means of adjustable means 505. The expanded dimensions of the expansive element 555 can generally accommodate the expanded dimensions of the expanded rear bar 527.

The canopy attachment means 105, furled fastening means 605, attachment latching means 705, adjustable means 505 and/or footboard attachment means 505 may consist of plastic, metal, and/or fabric material, in particular, string/rope/material strips, hook loop fastening straps, buckle mechanisms, and/or clips mechanisms etc. and be designed in several parts or in one piece.

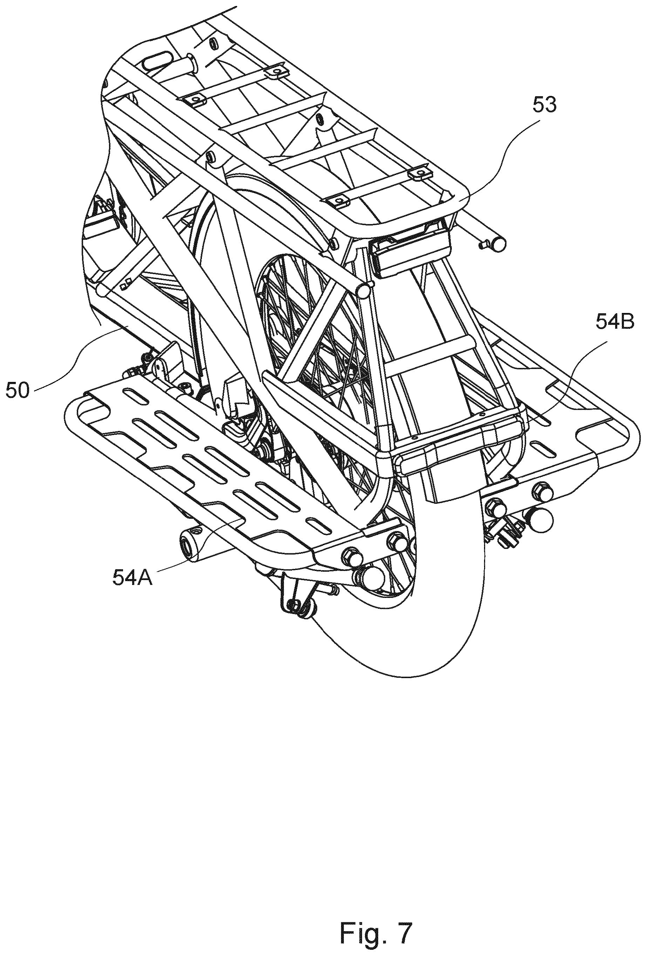

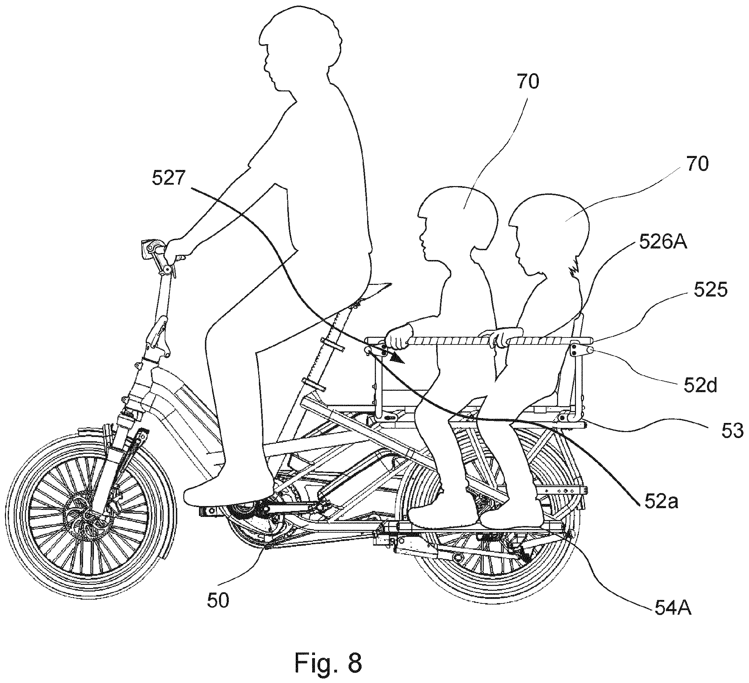

Fig. 7 shows a schematic perspective rear view of a rear rack and two footboards of a cargo bicycle. The footboards 54A, 54B can be separate footboards attached to the cargo bicycle 50 and/or be integrated with the cargo bicycle 50. Fig. 8 shows a schematic perspective view of another alternative rear safety cage, rear rack, and two footboards of a cargo bicycle having a bicyclist and individuals. The two side bars 526A, 526B can comprise wrapping tape and/or comprise gripping grooves for better gripping by individuals 70. When gripped by individuals 70, the two front protruding elements 52a, 52b and two rear protruding elements 52c, 52d of the two side bars 526A, 526B, respectively, are configured to also protect the hands and side of the bodies of individuals 70 from injury due to sideward falling down of the cargo bicycle 50 and/or side swipes from vehicles, walls and/or hard structures etc. when parked and/or during moving operation of a cargo bicycle 50.

The front bar 524, two front supporting bars 524a, 524b, rear bar 525, two rear supporting bars 525d, 525c and two side bars 526A, 526B of the rear safety cage 52 forming the interior seating space 527 and two footboards 54A 54B may consist of metals and/or alloys. In particular mild steel, preferably stainless steel, and/or particularly preferable, aluminum.

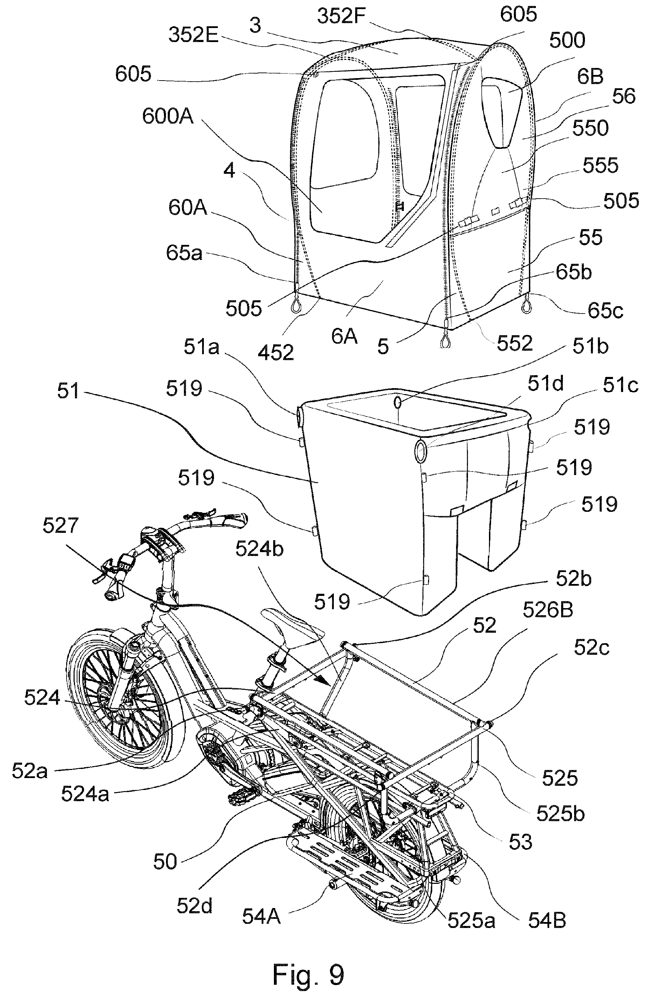

Fig. 9 shows a schematic perspective exploded view of a canopy 3, box 51, rear safety cage 52, rear rack 53 and two footboards 54A 54B of a cargo bicycle 1. Under an exploded view, it should be understood that some elements are shown "floating" on each other for the sake of clarity. The canopy 1 is similar to the canopy 1 illustrated in Figs. 1A to 3C. The box 51 is similar to the box 51 illustrated in Figs. 3A to 4C. The cargo bicycle 1 is similar to the cargo bicycle 1 shown in Figs. 1A to 3C and Figs. 5 to 8. The box 51 is reinforced by the rear safety cage 52 and two footboards 54A, 54b of the cargo bicycle 50 by tight fitting over the rear safety cage 52 and attachment to the two footboards 54A, 54B, respectively. The two front attachment holes 51a, 51b and two rear attachment holes 51c, 51d, correspond in dimensions with the two front protruding elements 52a, 52b and two rear protruding elements 52c, 52d, respectively, and are tightly slip-on attached therethrough, in which the two front attachment holes 51a, 51b and two rear attachment holes 51c, 51d at least partially, protrude through the two front attachment holes 51a, 51b and two rear attachment holes 51c, 51d, respectively, and an inner surface of the upper perimeter edge 518 rests flush with and/or correspond to and/or stretched to the dimensions of a perimeter formed by the front bar 524, rear bar 525 and two rear supporting bars 525d, 525c, allowing the box 51 to be reinforced by the rear safety cage 52. Additionally, the smaller area elastic edge 519, providing an inward tautening pulling force from the upper perimeter edge 518, allows the box 51 to be further reinforced by the rear safety cage 52. Following, the rear box shaping element 5150 and front box shaping element 5140 are fastened together below an underside of the rear rack 53 and the two box shaping elements 5160A, 5160B are fastened together above a topside of the rear rack 53. The heights of the box 51 from a side view plane from the upper perimeter edge 518 to the two lower perimeter side edges 513A, 513B, respectively, are generally equal to the height of the front bar 524, rear bar 525 and two rear supporting bars 525d, 525c from a side plane view to a top of the two footboards 54A, 54B, respectively, allowing the box 51 to also be reinforced by the two footboards 54A, 54B. Additionally, the footboard attachment means 505 being tightly fastened to the two footboards 54A, 54B, respectively, allows the box 51 to be reinforced by two footboards 54A, 54B.

The canopy 3 is reinforced by the rear safety cage 52 of the cargo bicycle 50 by tight fitting over and/or attachment latching means 705 to the rear safety cage 52, and/or bending stiffness of the front spring force arched cross member 452 and/or a rear spring force arched cross member 552. The attachment latching means 705 correspond in dimensions with the two front protruding elements 52a, 52b and two rear protruding elements 52c, 52d, respectively, and are tightly slip-on attached therethrough, in which the two front attachment holes 51a, 51b and two rear attachment holes 51c, 51d at least partially, protrude through the attachment latching means 705, respectively, and a plane area formed by the floor opening 2 tightly fits over a plane area formed by the front bar 524, rear bar 525, and two side bars 526A, 526B, forming a top plane of the interior seating space 527 of the rear safety cage 52, allowing the canopy 1 to be reinforced by the rear safety cage 52. Additionally and/or optionally, a cage attachment means 15 being tightly fastened to the rear rack 53 and/or cargo bicycle 50, respectively, allows the box 51 to be reinforced by the rear safety cage 52. A plane area formed by the floor opening 2 is generally above or in line with or below a plane area formed by the rear rack 53, allowing the canopy 1 to be reinforced by the rear safety cage 52.

Directions and references to an element, such as "up," "down,", "upper," "lower," "horizontal," "vertical," "left," "right," and the like, do not imply absolute relationships, positions, and/or orientations. Terms of an element, such as "first" and "second" are not literal, but, distinguishing terms. As used herein, terms "comprises" or "comprising" encompass the notions of "including" and "having" and specify the presence of elements, operations, and/or groups or combinations thereof and do not imply preclusion of the presence or addition of one or more other elements, operations and/or groups or combinations thereof. Sequence of operations do not imply absoluteness unless specifically so stated. Reference to an element in the singular, such as by use of the article "a" or "an", is not intended to mean "one and only one" unless specifically so stated, but rather "one or more". As used herein, "and/or" means "and" or "or", as well as "and" and "or." As used herein, ranges and subranges mean all ranges including whole and/or fractional values therein and language which defines or modifies ranges and subranges, such as "at least," "greater than," "less than," "no more than," and the like, mean subranges and/or an upper or lower limit. All structural and functional equivalents to the elements of the various embodiments described throughout the disclosure that are known or later come to be known to those of ordinary skill in the relevant art are intended to be encompassed by the features described and claimed herein.

## Claims

1. A cargo bicycle (50) with a rear safety cage (52) and two footboards (54A, 54B), and a box (51) and a canopy (1) attached to the cargo bicycle (50) with a rear safety cage (52) and two footboards (54A, 54B), the canopy (1) forming a useful upper interior space (7) for accommodating individuals (70), wherein the canopy (1) is at least partially reinforced by the rear safety cage (52) of the cargo bicycle (50), wherein the canopy (1) is provided with opening modification means for modifying openings of the upper interior space (7), wherein the canopy (1) is formed as an independent, sturdy soft-shelled cabin, wherein the canopy (1) comprises wall elements for forming the upper interior space (7) and wherein the wall elements comprise a floor opening (2), a ceiling element (3), a front wall (4), a rear wall (5) and two side walls (6A, 6B), wherein the canopy (1) comprises at least one, in particular two side elements (60A, 60B) and is detachable against two side fastening elements (65a/65d, 65b/65c) of the canopy (1) in a furled state of the at least one side element, wherein the side elements (60A, 60B) and two side fastening elements (65a/65d, 65b/65c) are formed by the two side walls (6A, 6B); the box (51) being reinforced by the rear safety cage (52) and the two footboards (54A, 54b) of the cargo bicycle (50), said box (51) comprising box wall elements for forming a soft-shelled seating cabin and a lower interior space (517) and two lower interior side spaces (5127A, 5127b), wherein the box wall elements comprise two box side elements (516A, 516B), two box inner side shaping elements (5160A, 5160B), a front box element (514), a front box shaping element (5140), a rear box element (515) and a rear box shaping element (5150).

2. The cargo bicycle (50) according to claim 1, wherein the canopy (1) includes opening modification means configured to enable modification between a furled state, in which the at least one side element has a side opening of the upper interior space (7), and an unfurled state, in which the at least one side element has no side opening of the upper interior space (7), wherein the side opening is less than 50%, preferably less than 75%, and particularly preferable less than 90% of the area of a respective side wall of the at least one side element; and wherein the canopy (1) comprises furled fastening means (605), in which the at least one side element is lockable in the furled state by means of the furled fastening means (605).

3. The cargo bicycle (50) according to one of the preceding claims, wherein the canopy (1) has a frame structure for framing of the upper interior space (7), wherein the frame structure comprises a front spring force arched cross member (452), a rear spring force arched cross member (552) and two diagonal arched ceiling members (352E, 352F); wherein the front wall (4), rear wall (5) and ceiling element (3) of the canopy (1) comprise frame structure receiving means, respectively, in which the front spring force arched cross member (452), rear spring force arched cross member (552) and two diagonal arched ceiling members (352E, 352F) are slip-on mounted to the frame structure receiving means of the front wall (4), rear wall (5) and ceiling element (3), respectively, by means of the frame structure receiving means.

4. The cargo bicycle (50) according to one of the preceding claims, wherein the canopy (1) comprises at least one side window (600A, 600B) on at least one, in particular two side walls (6A, 6B), in which the at least one side window (600A, 600B) has a maximum side window area, wherein in particular the maximum side window area is less than 65%, preferably less than 70%, and particularly preferable less than 75% of the two side walls (6A, 6B), respectively; and that the at least one side window (600A, 600B) comprises transparent and/or translucent material.

5. The cargo bicycle (50) according to one of the preceding claims, wherein the canopy (1) comprises at least one front window (400) on the front wall (4), in which the at least one front window (400) has a maximum front window area, wherein in particular the maximum front window area is less than 65%, preferably less than 70%, and particularly preferable less than 75% of the front wall (4); and that the at least one front window (400) comprise transparent and/or translucent material.

6. The cargo bicycle (50) according to one of the preceding claims, wherein the canopy (1) comprises at least one rear window (500) on the rear wall (5), in which the at least one rear window (500) has a maximum rear window area, wherein in particular the maximum rear window area is less than 10%, preferably less than 20%, and particularly preferable less than 30% of the rear wall (5); and that the at least one rear window (500) comprise transparent and/or translucent material.

7. The cargo bicycle (50) according to one of the preceding claims, wherein the canopy (1) further comprises volume modification means for modifying the volume of the upper interior space (7), wherein the canopy (1) comprises an upper rear element (56) and a lower rear element (55), wherein the upper rear element (56) comprises an expansive element (555) integrated with a non-expansive element (555), in which the upper rear element (55) overlaps and is expandable against the lower rear element (55), and wherein the upper rear element (56) and lower rear element (55) are formed by the rear wall (5).

8. The cargo bicycle (50) according to claim 7, **characterized in that** the canopy (1) comprises volume modification means for modifying between an expansive state, in which the upper interior space (7) has a maximum volume, and a non-expansive state, in which the upper interior space (7) has a non-expansive volume, wherein the non-expansive volume is less than 5%, preferably less than 10%, and particularly preferable less than 15% of the maximum volume; and wherein the canopy (1) comprises adjustable means (505), in which the canopy (1) can be modified to the expansive state and/or non-expansive state by means of said adjustable means (505).

9. The cargo bicycle (50) according to one of the preceding claims, wherein the rear safety cage (52) is configured to form a useful interior seating space (527) for accommodating individuals (70), wherein the rear safety cage (52) of the cargo bicycle (50) is configured to at least partially reinforce the canopy (1) of the cargo bicycle (50).

10. The cargo bicycle (50) according to claim 9, wherein the rear safety cage (52) comprises bar elements for forming the interior seating space (527), wherein the bar elements comprise a front bar (524), two front supporting bars (524a, 524b), a rear bar (525), two rear supporting bars (525d, 525c) and two side bars (526A, 526B), wherein the rear safety cage (52) comprises two front protruding elements (52a, 52b) and two rear protruding elements (52c, 52d); and wherein the canopy (1) is at least partially reinforced by the rear safety cage (52) by attachment to the two front protruding elements (52a, 52b) and two rear protruding elements (52c, 52d).

11. The cargo bicycle (50) according to claim 10, wherein the two front protruding elements (52a, 52b) and two rear protruding elements (52c, 52d) are configured to protect the hands and side of the bodies of individuals (70) from injury due to sideward falling down of the cargo bicycle (50) and/or side swipes from vehicles, walls and/or hard structures, when parked and/or during moving operation of the cargo bicycle (50).

12. The cargo bicycle (50) according to any of the preceding claims, wherein at least one of the canopy (1) or box (51) is made of a waterproof, a showerproof, a moisture wicking, a quick drying, a wind resistant, a dirt resistant, a mildew resistant, an oil resistant, a salt resistant, a chemical resistant or a UV ray resistant material or coating or any combination thereof.

13. The cargo bicycle (50) according to any of the preceding claims, further comprising at least one of a passenger bike seat and child bike seat being mounted to the rear rack (53) of the cargo bicycle (50).

14. The cargo bicycle (50) according to any of the preceding claims, wherein the cargo bicycle (50) is at least one of a pedal, pedal-based electric assist or electric cargo bicycle.

## Patentansprüche

1. Lastenfahrrad (50) mit einem hinteren Sicherheitskäfig (52) und zwei Trittbrettern (54A, 54B), und einer Box (51) und einer Überdachung (1), die an dem Lastenfahrrad (50) mit einem hinteren Sicherheitskäfig (52) und zwei Trittbrettern (54A, 54B) angebracht sind, wobei die Überdachung (1) einen nutzbaren oberen Innenraum (7) zur Unterbringung von Personen (70) bildet, wobei die Überdachung (1) zumindest teilweise durch den hinteren Sicherheitskäfig (52) des Lastenfahrrads (50) verstärkt ist, wobei die Überdachung (1) mit Öffnungsmodifizierungsmitteln zum Modifizieren von Öffnungen des oberen Innenraums (7) versehen ist, wobei die Überdachung (1) als eine eigenständige, robuste Weichschalen-Kabine ausgebildet ist, wobei die Überdachung (1) Wandelemente zur Bildung des oberen Innenraums (7) umfasst und wobei die Wandelemente eine Bodenöffnung (2), ein Deckenelement (3), eine vordere Wand (4), eine hintere Wand (5) und zwei Seitenwände (6A, 6B) umfassen, wobei die Überdachung (1) mindestens ein, insbesondere zwei Seitenelemente (60A, 60B) umfasst und gegen zwei Seitenbefestigungselemente (65a/65d, 65b/65c) der Überdachung (1) in einem aufgerollten Zustand des mindestens einen Seitenelements abnehmbar ist, wobei die Seitenelemente (60A, 60B) und zwei Seitenbefestigungselemente (65a/65d, 65b/65c) durch die zwei Seitenwände (6A, 6B) gebildet sind; wobei die Box (51) durch den hinteren Sicherheitskäfig (52) und die beiden Trittbretter (54A, 54b) des Lastenfahrrads (50) verstärkt ist, die Box (51) umfasst Boxwandelemente zur Bildung einer Weichschalen-Sitzkabine und eines unteren Innenraums (517) sowie von zwei unteren Innenseitenräumen (5127A, 5127b), wobei die Boxwandelemente zwei Boxseitenelemente (516A, 516B), zwei Boxinnenseitenformgebungselemente (5160A, 5160B), ein vorderes Boxelement (514), ein vorderes Boxformgebungselement (5140), ein hinteres Boxelement (515) und ein hinteres Boxformgebungselement (5150) umfassen.

2. Lastenfahrrad (50) nach Anspruch 1, bei welchem die Überdachung (1) Öffnungsmodifizierungsmittel beinhaltet, die konfiguriert sind, um eine Modifizierung zwischen einem aufgerollten Zustand, in dem das mindestens eine Seitenelement eine Seitenöffnung des oberen Innenraums (7) aufweist, und einem nicht-aufgerollten Zustand zu ermöglichen, in dem das mindestens eine Seitenelement keine Seitenöffnung des oberen Innenraums (7) aufweist, wobei die Seitenöffnung weniger als 50%, vorzugsweise weniger als 75%, und besonders bevorzugt weniger als 90% der Fläche einer entsprechenden Seitenwand des mindestens einen Seitenelements beträgt; und wobei die Überdachung (1) Aufrollbefestigungsmittel (605) umfasst, wobei das mindestens eine Seitenelement im aufgerollten Zustand mittels der Aufrollbefestigungsmittel (605) feststellbar ist.

3. Lastenfahrrad (50) nach einem der vorhergehenden Ansprüche, bei welchem die Überdachung (1) eine Rahmenstruktur zum Umrahmen des oberen Innenraums (7) aufweist, wobei die Rahmenstruktur eine vordere federkraftgebogene Querstrebe (452), eine hintere federkraftgebogene Querstrebe (552) und zwei diagonal gebogene Deckenstabelemente (352E, 352F) umfasst; wobei die vordere Wand (4), die hintere Wand (5) und das Deckenelement (3) der Überdachung (1) jeweils Rahmenstrukturaufnahmemittel umfassen, wobei die vordere federkraftgebogene Querstrebe (452), die hintere federkraftgebogene Querstrebe (552) und die beiden diagonal gebogenen Deckenstabelemente (352E, 352F) mittels der Rahmenstrukturaufnahmemittel entsprechend an den Rahmenstrukturaufnahmemitteln der vorderen Wand (4), hinteren Wand (5) und des Deckenelements (3) durch Aufstecken montiert sind.

4. Lastenfahrrad (50) nach einem der vorhergehenden Ansprüche, bei welchem die Überdachung (1) mindestens ein Seitenfenster (600A, 600B) an mindestens einer, insbesondere zwei Seitenwänden (6A, 6B) umfasst, wobei das mindestens eine Seitenfenster (600A, 600B) eine maximale Seitenfensterfläche hat, wobei im Speziellen die maximale Seitenfensterfläche weniger als 65 %, vorzugsweise weniger als 70 % und besonders bevorzugt weniger als 75 % der jeweiligen zwei Seitenwände (6A, 6B) beträgt; und wobei das mindestens eine Seitenfenster (600A, 600B) ein transparentes und/oder transluzentes Material umfasst.

5. Lastenfahrrad (50) nach einem der vorhergehenden Ansprüche, bei welchem die Überdachung (1) mindestens ein vorderes Fenster (400) an der vorderen Wand (4) umfasst, wobei das mindestens eine vordere Fenster (400) eine maximale vordere Fensterfläche hat, wobei im Speziellen die maximale vordere Fensterfläche weniger als 65%, vorzugsweise weniger als 70%, und besonders bevorzugt weniger als 75% der vorderen Wand (4) beträgt; und wobei das mindestens eine vordere Fenster (400) ein transparentes und/oder transluzentes Material umfasst.

6. Lastenfahrrad (50) nach einem der vorhergehenden Ansprüche, bei welchem die Überdachung (1) mindestens ein hinteres Fenster (500) an der hinteren Wand (5) umfasst, wobei das mindestens eine hintere Fenster (500) eine maximale hintere Fensterfläche hat, wobei im Speziellen die maximale hintere Fensterfläche weniger als 10%, vorzugsweise weniger als 20%, und besonders bevorzugt weniger als 30% der hinteren Wand (5) beträgt; und wobei das mindestens eine hintere Fenster (500) ein transparentes und/oder transluzentes Material umfasst.

7. Lastenfahrrad (50) nach einem der vorhergehenden Ansprüche, bei welchem die Überdachung (1) ferner Volumenmodifizierungsmittel zum Modifizieren des Volumens des oberen Innenraums (7) umfasst, wobei die Überdachung (1) ein oberes Hinterseitenelement (56) und ein unteres Hinterseitenelement (55) umfasst, wobei das obere Hinterseitenelement (56) ein expansives Element (555) umfasst, das mit einem nicht-expansiven Element (555) zusammengeschlossen ist, wobei das obere Hinterseitenelement (55) das untere Hinterseitenelement (55) überlappt und gegen dieses expandierbar ist, und wobei das obere Hinterseitenelement (56) und das untere Hinterseitenelement (55) durch die hintere Wand (5) gebildet sind.

8. Lastenfahrrad (50) nach Anspruch 7, **dadurch gekennzeichnet, dass** die Überdachung (1) Volumenmodifizierungsmittel zum Modifizieren zwischen einem expansiven Zustand, in dem der obere Innenraum (7) ein maximales Volumen aufweist, und einem nicht-expansiven Zustand umfasst, in dem der obere Innenraum (7) ein nicht-expansives Volumen aufweist, wobei das nicht-expansive Volumen weniger als 5%, vorzugsweise weniger als 10%, und besonders bevorzugt weniger als 15% des maximalen Volumens beträgt; und wobei die Überdachung (1) Verstellmittel (505) umfasst, wobei die Überdachung (1) mithilfe dieser Verstellmittel (505) in den expansiven Zustand und/oder nicht-expansiven Zustand umgebaut werden kann.

9. Lastenfahrrad (50) nach einem der vorhergehenden Ansprüche, bei welchem der hintere Sicherheitskäfig (52) zur Ausbildung eines nutzbaren Innensitzraums (527) zur Unterbringung von Personen (70) konfiguriert ist, wobei der hintere Sicherheitskäfig (52) des Lastenfahrrads (50) so konfiguriert ist, dass er die Überdachung (1) des Lastenfahrrads (50) zumindest teilweise verstärkt.

10. Lastenfahrrad (50) nach Anspruch 9, bei welchem der hintere Sicherheitskäfig (52) Stangenelemente zur Ausbildung des Innensitzraums (527) umfasst, wobei die Stangenelemente eine vordere Stange (524), zwei vordere Stützstangen (524a, 524b), eine hintere Stange (525), zwei hintere Stützstangen (525d, 525c) und zwei Seitenstangen (526A, 526B) umfassen, wobei der hintere Sicherheitskäfig (52) zwei vordere vorstehende Elemente (52a, 52b) und zwei hintere vorstehende Elemente (52c, 52d) umfasst; und wobei die Überdachung (1) zumindest teilweise durch den hinteren Sicherheitskäfig (52) verstärkt ist durch Befestigen an den beiden vorderen vorstehenden Elementen (52a, 52b) und den beiden hinteren vorstehenden Elementen (52c, 52d).

11. Lastenfahrrad (50) nach Anspruch 10, bei welchem die beiden vorderen vorstehenden Elemente (52a, 52b) und die beiden hinteren vorstehenden Elemente (52c, 52d) konfiguriert sind, um die Hände und Seite der Körper von Personen (70) vor Verletzungen infolge eines seitlichen Umkippens des Lastenfahrrads (50) und/oder seitlichen Stößen durch Fahrzeuge, Mauern und/oder harte Strukturen beim Parken und/oder während des Fahrbetriebs des Lastenfahrrads (50) zu schützen.

12. Lastenfahrrad (50) nach einem der vorhergehenden Ansprüche, bei welchem mindestens eine von der Überdachung (1) oder Box (51) aus einem wasserdichten, regenabweisenden, feuchtigkeitstransportierenden, schnelltrocknenden, windabweisenden, schmutzabweisenden, schimmelresistenten, ölbeständigen, salzbeständigen, chemikalienbeständigen oder gegen UV-Strahlung beständigen Material oder Beschichtung oder einer beliebigen Kombination davon gefertigt ist.

13. Lastenfahrrad (50) nach einem der vorhergehenden Ansprüche, welches ferner mindestens einen von einem Fahrradsitz für Passagiere und einem Kinderfahrradsitz umfasst, der am Gepäckträger (53) des Lastenfahrrads (50) montiert ist.

14. Lastenfahrrad (50) nach einem der vorhergehenden Ansprüche, wobei das Lastenfahrrad (50) mindestens eines von einem Pedal-, pedalbasierten elektrisch unterstützten oder Elektrolastenfahrrad ist.

## Revendications

1. Vélo-cargo (50) avec une cage de sécurité arrière (52) et deux marchepieds (54A, 54B), et une boîte (51) et un auvent (1) attachés au vélo-cargo (50) avec une cage de sécurité arrière (52) et deux marchepieds (54A, 54B), l'auvent (1) formant un espace intérieur supérieur utile (7) pour loger des personnes (70), dans lequel l'auvent (1) est au moins partiellement renforcé par la cage de sécurité arrière (52) du vélo-cargo (50), dans lequel l'auvent (1) est pourvu de moyens de modification d'ouverture pour modifier des ouvertures de l'espace intérieur supérieur (7), dans lequel l'auvent (1) est formé comme une cabine indépendante, robuste et à coque souple, dans lequel l'auvent (1) comprend des éléments de paroi pour former l'espace intérieur supérieur (7) et dans lequel les éléments de paroi comprennent une ouverture de plancher (2), un élément de plafond (3), une paroi avant (4), une paroi arrière (5) et deux parois latérales (6A, 6B), dans lequel l'auvent (1) comprend au moins un, en particulier deux éléments latéraux (60A, 60B) et est détachable contre deux éléments de fixation latéraux (65a/65d, 65b/65c) de l'auvent (1) dans un état enroulé de l'au moins un élément latéral, dans lequel les éléments latéraux (60A, 60B) et les deux éléments de fixation latéraux (65a/65d, 65b/65c) sont formés par les deux parois latérales (6A, 6B) ; la boîte (51) étant renforcée par la cage de sécurité arrière (52) et les deux marchepieds (54A, 54b) du vélo-cargo (50), ladite boîte (51) comprenant des éléments de paroi de boîte pour former une cabine d'assise à coque souple et un espace intérieur inférieur (517) et deux espaces latéraux intérieurs inférieurs (5127A, 5127b), dans lequel les éléments de paroi de boîte comprennent deux éléments latéraux de boîte (516A, 516B), deux éléments de mise en forme latéraux intérieurs de boîte (5160A, 5160B), un élément de boîte avant (514), un élément de mise en forme de boîte avant (5140), un élément de boîte arrière (515) et un élément de mise en forme de boîte arrière (5150).

2. Vélo-cargo (50) selon la revendication 1, dans lequel l'auvent (1) inclut des moyens de modification d'ouverture configurés pour permettre la modification entre un état enroulé, dans lequel l'au moins un élément latéral présente une ouverture latérale de l'espace intérieur supérieur (7), et un état déplié, dans lequel l'au moins un élément latéral ne présente pas d'ouverture latérale de l'espace intérieur supérieur (7), dans lequel l'ouverture latérale est inférieure à 50 %, de préférence inférieure à 75 %, et particulièrement de préférence inférieure à 90 % de la surface d'une paroi latérale respective de l'au moins un élément latéral ; et dans lequel l'auvent (1) comprend des moyens de fixation enroulés (605), dans lesquels l'au moins un élément latéral peut être verrouillé dans l'état enroulé au moyen des moyens de fixation enroulés (605).

3. Vélo-cargo (50) selon l'une quelconque des revendications précédentes, dans lequel l'auvent (1) présente une structure de cadre pour encadrer l'espace intérieur supérieur (7), dans lequel la structure de cadre comprend une traverse arquée à ressort avant (452), une traverse arquée à ressort arrière (552) et deux organes de plafond arqués diagonaux (352E, 352F) ; dans lequel la paroi avant (4), la paroi arrière (5) et l'élément de plafond (3) de l'auvent (1) comprennent des moyens de réception de la structure de cadre, respectivement, dans lesquels la traverse arquée à ressort avant (452), la traverse arquée à ressort arrière (552) et les deux organes de plafond arqués diagonaux (352E, 352F) sont montés par glissement sur les moyens de réception de structure de cadre de la paroi avant (4), de la paroi arrière (5) et de l'organe de plafond (3), respectivement, au moyen des moyens de réception de structure de cadre.

4. Vélo-cargo (50) selon l'une quelconque des revendications précédentes, dans lequel l'auvent (1) comprend au moins une fenêtre latérale (600A, 600B) sur au moins une, et en particulier deux parois latérales (6A, 6B), dans lesquelles l'au moins une fenêtre latérale (600A, 600B) présente une surface de fenêtre latérale maximale, dans lequel en particulier la surface de fenêtre latérale maximale est inférieure à 65 %, de préférence inférieure à 70 %, et particulièrement de préférence inférieure à 75 % des deux parois latérales (6A, 6B), respectivement ; et qu'au moins une fenêtre latérale (600A, 600B) comprend du matériau transparent et/ou translucide.

5. Vélo-cargo (50) selon l'une quelconque des revendications précédentes, dans lequel l'auvent (1) comprend au moins une fenêtre avant (400) sur la paroi avant (4), dans laquelle l'au moins une fenêtre avant (400) présente une surface de fenêtre avant maximale, dans lequel en particulier la surface de fenêtre avant maximale est inférieure à 65 %, de préférence inférieure à 70 %, et particulièrement de préférence inférieure à 75 % de la paroi avant (4) ; et en ce que l'au moins une fenêtre avant (400) comprend du matériau transparent et/ou translucide.

6. Vélo-cargo (50) selon l'une quelconque des revendications précédentes, dans lequel l'auvent (1) comprend au moins une fenêtre arrière (500) sur la paroi arrière (5), dans laquelle l'au moins une fenêtre arrière (500) présente une surface de fenêtre arrière maximale, dans lequel en particulier la surface de fenêtre arrière maximale est inférieure à 10 %, de préférence inférieure à 20 %, et particulièrement de préférence inférieure à 30 % de la paroi arrière (5) ; et en ce que l'au moins une fenêtre arrière (500) comprend un matériau transparent et/ou translucide.

7. Vélo-cargo (50) selon l'une quelconque des revendications précédentes, dans lequel l'auvent (1) comprend en outre des moyens de modification de volume pour modifier le volume de l'espace intérieur supérieur (7), dans lequel l'auvent (1) comprend un élément arrière supérieur (56) et un élément arrière inférieur (55), dans lequel l'élément arrière supérieur (56) comprend un élément d'extension (555) intégré à un élément de non-extension (555), dans lequel l'élément arrière supérieur (55) chevauche et est extensible contre l'élément arrière inférieur (55), et dans lequel l'élément arrière supérieur (56) et l'élément arrière inférieur (55) sont formés par la paroi arrière (5).

8. Vélo-cargo (50) selon la revendication 7, **caractérisé en ce que** l'auvent (1) comprend des moyens de modification de volume pour la modification entre un état d'extension, dans lequel l'espace intérieur supérieur (7) présente un volume maximal, et un état de non-extension, dans lequel l'espace intérieur supérieur (7) présente un volume de non-extension, dans lequel le volume de non-extension est inférieur à 5 %, de préférence inférieur à 10 %, et particulièrement de préférence inférieur à 15 % du volume maximal ; et dans lequel l'auvent (1) comprend des moyens ajustables (505) dans lesquels l'auvent (1) peut être modifié vers l'état d'extension et/ou l'état de non-extension au moyen desdits moyens ajustables (505).

9. Vélo-cargo (50) selon l'une quelconque des revendications précédentes, dans lequel la cage de sécurité arrière (52) est configurée pour former un espace intérieur utile (527) pour loger des personnes (70), dans lequel la cage de sécurité arrière (52) du vélo-cargo (50) est configurée pour renforcer au moins partiellement l'auvent (1) du vélo-cargo (50).

10. Vélo-cargo (50) selon la revendication 9, dans lequel la cage de sécurité arrière (52) comprend des éléments de barre pour former l'espace d'assise intérieur (527), dans lequel les éléments de barre comprennent une barre avant (524), deux barres de support avant (524a, 524b), une barre arrière (525), deux barres de support arrière (525d, 525c) et deux barres latérales (526A, 526B), dans lequel la cage de sécurité arrière (52) comprend deux éléments saillants avant (52a, 52b) et deux éléments saillants arrière (52c, 52d) ; et dans lequel l'auvent (1) est au moins partiellement renforcé par la cage de sécurité arrière (52) par fixation aux deux éléments saillants avant (52a, 52b) et aux deux éléments saillants arrière (52c, 52d).

11. Vélo-cargo (50) selon la revendication 10, dans lequel les deux éléments saillants avant (52a, 52b) et les deux éléments saillants arrière (52c, 52d) sont configurés pour protéger les mains et les côtés du corps des personnes (70) contre les blessures dues à la chute latérale du vélo-cargo (50) et/ou aux chocs latéraux causés par des véhicules, murs et/ou structures rigides, lors du stationnement et/ou pendant l'opération de déplacement du vélo-cargo (50).

12. Vélo-cargo (50) selon l'une quelconque des revendications précédentes, dans lequel au moins un parmi l'auvent (1) ou la boîte (51) est constitué d'un matériau ou revêtement imperméable, résistant à la pluie, évacuant l'humidité, à séchage rapide, résistant au vent, résistant à la saleté, résistant à la moisissure, résistant à l'huile, résistant au sel, résistant aux produits chimiques ou résistant aux rayons UV ou toute combinaison de ceux-ci.

13. Vélo-cargo (50) selon l'une quelconque des revendications précédentes, comprenant en outre au moins un siège de vélo passager et un siège de vélo enfant étant montés sur le porte-bagages arrière (53) du vélo-cargo (50).

14. Vélo-cargo (50) selon l'une quelconque des revendications précédentes, dans lequel le vélo-cargo (50) est au moins un parmi un vélo-cargo à pédales, à assistance électrique à pédales ou électrique.
